(19) Europäisches Patentamt
European Patent Office
Office européen des brevets

(11) Veröffentlichungsnummer: **0 118 030**
**B1**

# (12) EUROPÄISCHE PATENTSCHRIFT

(45) Veröffentlichungstag der Patentschrift: **03.06.87**

(51) Int. Cl.⁴: **C 08 L 83/04**, C 08 L 83/06

(21) Anmeldenummer: **84101039.0**

(22) Anmeldetag: **02.02.84**

(54) **Unter Ausschluss von Wasser lagerfähige, bei Zutritt von Wasser bei Raumtemperatur zu Elastomeren vernetzende Massen.**

(30) Priorität: **03.02.83 DE 3303649**

(43) Veröffentlichungstag der Anmeldung: **12.09.84 Patentblatt 84/37**

(45) Bekanntmachung des Hinweises auf die Patenterteilung: **03.06.87 Patentblatt 87/23**

(84) Benannte Vertragsstaaten: **AT BE CH DE FR GB IT LI NL SE**

(56) Entgegenhaltungen:
**BE - A - 881 499**
**DE - A - 2 640 328**
**US - A - 3 189 576**

(73) Patentinhaber: **WACKER-CHEMIE GMBH, Prinzregentenstrasse 22, D-8000 München 22 (DE)**

(72) Erfinder: **Von Au, Günter, Dr. Dipl.-Chem., Rua Regina Bodra 105 Jardim dos Estados, 04641 Sao Paulo (BR)**
Erfinder: **Wegehaupt, Karl-Heinrich, Dr. Dipl.-Chem., Marktler Strasse 78, D-8263 Burghausen (DE)**
Erfinder: **Schiller, August, Dr. Dipl.-Chem., Göllstrasse 22, D-8265 Neuötting (DE)**
Erfinder: **Braunsperger, Karl, Unterhadermark 86, D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 118 030 B1

ACTORUM AG

**Beschreibung**

Aus US 3 189 576 (ausgegeben 15. Juni 1965, E. Sweet, Dow Corning Corporation) sind unter Ausschluss von Wasser lagerfähige, bei Zutritt von Wasser bei Raumtemperatur zu Elastomeren vernetzende Massen bereits bekannt, die durch Vermischen von kondensationsfähige Endgruppen aufweisendem Diorganopolysiloxan mit mindestens drei über Sauerstoff an Silicium gebundene Oximgruppen je Molekül aufweisender Siliciumverbindung sowie gegebenenfalls mindestens einem weitere Stoff hergestellt worden sind.

Aufgabe der Erfindung ist, unter Ausschluss von Wasser lagerfähige, bei Zutritt von Wasser bei Raumtemperatur zu Elastomeren vernetzende Massen bereitzustellen, die durch Vermischen von kondensationsfähige Endgruppen aufweisendem Diorganopolysiloxan mit mindestens drei über Sauerstoff an Silicium gebundene Oximgruppen je Molekül aufweisender Siliciumverbindung sowie gegebenenfalls mindestens einem weiteren Stoff hergestellt worden sind, homogen sind, auch ohne Mitverwendung von als Kondensationskatalysatoren geeigneten organischen Metallverbindungen oder Organometallverbindungen, wie Dibutylzinndilaurat, innerhalb erwünschter Zeiten vernetzen, auch bei Temperaturen von 0° bis 30° innerhalb erwünschter, auch nach längerer Lagerung sich nur wenig verändernder Zeit bei Zutritt von Wasser auf ihrer Oberfläche eine Haut bilden und Elastomere ergeben, die auf den Unterlagen, auf denen sie erzeugt wurden, besonders fest haften, wobei als mindestens drei über Sauestoff an Silicium gebundene Oximgruppen je Molekül aufweisende Siliciumverbindungen leicht solche verwendet werden können, die bei Raumtemperatur flüssig sind. Diese Aufgabe wird durch die Erfindung gelöst.

Gegenstand der Erfindung sind unter Ausschluss von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit mindestens drei über Sauerstoff an Silicium gebundene Oximgruppe je Molekül aufweisender Siliciumverbindung sowie gegebenenfalls mindestens einem weiteren Stoff hergestellt worden sind, dadurch gekennzeichnet, dass als mindestens ein Teil von mindestens drei über Sauerstoff an Silicium gebundene Oximgruppen je Molekül aufweisenden Siliciumverbindungen ein Gemisch aus Silan, an dessen Siliciumatom vier Oximgruppen über Sauerstoff gebunden sind, und Silan, an dessen Siliciumatom ein Kohlenwasserstoffrest SiC-gebunden ist und drei Oximgruppen über Sauerstoff gebunden sind, oder Oligomer aus derartigem Silangemisch verwendet worden ist.

Gemäss DE-A-2 640 328 werden als Vernetzer organische Siliciumverbindungen mit Aminoxygruppen, nicht aber mit Oximgruppen verwendet. Diese Druckschrift empfiehlt die gleichzeitige Verwendung von organischer Siliciumverbindung mit mindestens 3 Aminoxygruppen je Molekül und von organischer Siliciumverbindung mit 2 Aminoxygruppen je Molekül. Dies ergibt verhältnismässig geringe Vernetzungsdichte, die zu hoher Dehnung und geringem Modul der Elastomeren führt. Ein Silan, an dessen Siliciumatom vier Oximgruppen über Sauerstoff gebunden sind oder ein Oligomer von solchem Silan kann jedoch die Vernetzungsdichte nicht erniedrigen. Folglich konnte DE-A-2 640 328 die Erfindung auch nicht nahelegen.

Als kondensationsfähige Endgruppen aufweisende Diorganopolysiloxane können auch bei der Bereitung der erfindungsgemässen Massen die gleichen kondensationsfähige Endgruppen aufweisenden Diorganopolysiloxane verwendet werden, die bisher zur Herstellung von unter Ausschluss von wasserlagerfähigen, bei Zutritt von Wasser bei Raumtemperatur zu Elastomeren vernetzenden Massen durch Vermischen von kondensationsfähige Endgruppen aufweisendem Diorganopolysiloxan mit mindestens drei über Sauerstoff an Silicium gebundene Oximgruppen je Molekül aufweisende Siliciumverbindung sowie gegebenenfalls mindestens einem weiteren Stoff verwendet werden konnten. Die bisher meist dafür verwendeten und auch bei der Herstellung der erfindungsgemässen Massen bevorzugt eingesetzten, kondensationsfähige Endgruppen aufweisenden Diorganopolysiloxane können z.B. durch die Formel

$$HO\ (SiR_2O)_m\ SiR_2\ OH$$

wiedergegeben werden. In dieser Formel bedeutet R gleiche oder verschiedene, einwertige, SiC-gebundene organische Reste und m ist eine ganze Zahl im Wert von mindestens 10.

Innerhalb der bzw. entlang den Siloxanketten der oben angegebenen Formel können, was durch derartige Formeln üblicherweise nicht dargestellt wird, zusätzlich zu den Diorganosiloxaneinheiten ($SiR_2O$) noch andere Siloxaneinheiten vorliegen. Beispiele für solche anderen, meist jedoch lediglich als mehr oder weniger schwer vermeidbare Verunreinigung vorliegende, Siloxaneinheiten sind solche der Formeln $RSiO_{3/2}$, $R_3SiO_{1/2}$, und $SiO_{4/2}$, wobei R jeweils die oben dafür angegebene Bedeutung hat. Vorzugsweise beträgt die Menge an solchen anderen Siloxaneinheiten als Diorganosiloxaneinheiten jedoch insgesamt höchstens 5 Molprozent der in den kondensationsfähige Endgruppen aufweisenden Diorganopolysiloxanen vorliegenden Siloxaneinheiten. Die Hydroxylgruppen in der oben angegebenen Formel von kondensationsfähige Endgruppen aufweisenden Diorganopolysiloxanen können, falls erwünscht, vollständig oder teilweise durch andere kondensationsfähige Gruppen, wie Alkoxygruppen mit 1 bis 4 Kohlenstoffatomen je Gruppe, ersetzt sein.

Beispiele für Reste R sind insbesondere Kohlenwasserstoffreste mit 1 bis 18 Kohlenstoffatomen je Rest, wie lineare oder verzweigte Alkylreste, z.B. der Methyl-, Ethyl-, n-Propyl-, Isopropyl-, n-Butyl-, sec. -Butyl-, 2-Ethylhexyl-, n-Decyl- und n-Tetradecylrest sowie Octadecylreste; Cycloalkylreste, z.B. der Cyclohexylrest und Methylcyclohexylreste; lineare oder verzweigte Alkenylreste; z.B. der Vinyl-, Alkyl- und Methallylrest; Arylreste, z.B. der Phenylrest; Alkarylreste, z.B. Tolylreste; und Aralkylreste, wie der beta-Phenylethylrest.

Weitere Beispiele für Reste R sind lineare oder verzweigte oder cyclische substituierte Kohlenwasserstoffreste, wie halogenierte Kohlenwasserstoffreste, z.B. der 3,3,3-Trifluorpropylrest und Chlorphenyl- sowie Bromphenylreste; und Cyanoalkylreste, z.B. der beta-Cyanethylrest. Vorzugsweise sind, insbesondere der leichteren Zugänglichkeit, mindestens 80% der Anzahl der SiC-gebundenen organischen Reste in den kondensationsfähige Endgruppen aufweisenden Diorganopolysiloxanen und damit auch der Reste R in der oben angegebenen Formel der bevorzugten Art von kondensationsfähige Endgruppen aufweisendem Diorganopolysiloxan Methylreste.

Bei den kondensationsfähige Endgruppen aufweisenden Diorganopolysiloxanen kann es sich um Homo- oder Mischpolymerisate handeln, wobei die einzelnen Moleküle gleiche oder verschiedene Kettenlängen aufweisen können. Es kann eine Art von kondensationsfähige Endgruppen aufweisendem Diorganopolysiloxan bei der Bereitung der erfindungsgemässen Massen verwendet werden. Es kann aber auch ein Gemisch aus mindestens zwei verschiedenen Arten von kondensationsfähige Endgruppen aufweisendem Diorganopolysiloxan bei der Bereitung der erfindungsgemässen Massen eingesetzt werden.

Die durchschnittliche Viskosität vom kondensationsfähige Endgruppen aufweisendem Diorganopolysiloxan beträgt vorzugsweise 500 bis $1 \cdot 10^6$ mPa·s bei 25°C.

Vorzugsweise liegen bei den Siliciumatomen mit Oximgruppen insgesamt 0,25 bis 25 Siliciumatome mit SiC-gebundenem Kohlenwasserstoffrest je Siliciumatom mit der Gruppierung $Si(-O-)_4$ ist, wobei die -O- insbesondere Siloxansauerstoffatome oder Teile von Oximgruppen sein können, desto rascher erfolgen Hautbildung und Vernetzung in vorbestimmbarem Ausmass.

Die Oximgruppen in den zur Bereitung der erfindungsgemässen Massen eingesetzten Siliciumverbindungen mit Oximgruppen können die gleichen Oximgruppen sein, die auch in den bisher zur Herstellung von unter Ausschluss von wasserlagerfähigen, bei Zutritt von Wasser bei Raumtemperatur zu Elastomeren vernetzenden Massen verwendeten Siliciumverbindungen mit Oximgruppen vorliegen konnten. In der eingangs genannten US-Patentschrift sowie in US 4 126 630 (ausgegeben 21. November 1978, H. Müller et al., Wacker-Chemie GmbH) sind zahlreiche Beispiele für solche Oximgruppen angegeben.

Die zur Herstellung der erfindungsgemässen Massen bevorzugt eingesetzten Silane, anderen Siliciumatome vier Oximgruppen über Sauerstoff gebunden sind, bzw. Ausgangsprodukte für entsprechende Oligomere sind jedoch solche, die durch die Formel

$$Si(ON=X)_4$$

wiedergegeben werden können. Ebenso sind die zur Herstellung der erfindungsgemässen Massen bevorzugt eingesetzten Silane, an deren Siliciumatome ein Kohlenwasserstoffrest SiC-gebunden ist und drei Oximgruppen über Sauerstoff gebunden sind, bzw. Ausgangsprodukte für entsprechende Oligomere vorzugsweise solche, die durch die Formel

$$RSi(ON=X)_3$$

wiedergegeben werden können.

In der vorstehend angegebenen Formel hat R die oben dafür angegebene Bedeutung, wobei wieder der Methylrest am meisten bevorzugt ist. X bedeutet in beiden Formeln gleiche oder verschiedene Reste der Formel $R^1_2C=$ oder $R^2C=$, wobei $R^1$ Wasserstoff oder gleiche oder verschiedene, einwertige Kohlenwasserstoffreste mit 1 bis 5 Kohlenstoffatomen je Rest bedeutet, mit der Massgabe, dass mindestens ein $R^1$ ein Kohlenwasserstoffrest ist, wobei besonders bevorzugt ist, dass beide $R^1$ Kohlenwasserstoffreste sind, und $R^2$ einen zweiwertigen Kohlenwasserstoffrest mit 5 oder 6 Kohlenstoffatomen bedeutet.

Die wichtigsten Beispiele für Kohlenwasserstoffreste $R^1$ sind der Methyl- und der Ethylrest. Das wichtigste Beispiel für einen Rest der Formel $R^2C=NO-$ ist der Cyclohexanonoximrest.

Es kann eine Art von Silan, an dessen Siliciumatom vier Oximgruppen über Sauerstoff gebunden ist, oder ein Gemisch aus mindestens zwei verschiedenen Arten derartiger Silane bei der Bereitung der erfindungsgemässen Massen verwendet werden. Ebenso kann eine Art von Silan, an dessen Siliciumatom ein Kohlenwasserstoffrest SiC-gebunden ist und drei Oximgruppen über Sauerstoff gebunden sind, oder ein Gemisch aus mindestens zwei verschiedene Arten derartiger Silane mit SiC-gebundenem Kohlenwasserstoffrest bei der Bereitung der erfindungsgemässen Massen verwendet werden.

Vorzugsweise enthalten die Oligomere 2 bis 6 Siliciumatome je Molekül. Sie sind insbesondere durch Teilhydrolyse der die Oximgruppen enthaltenden Silane zugänglich.

Weil sie bei Raumtemperatur flüssig sind, sind bei der Bereitung der erfindungsgemässen Massen als mindestens drei über Sauerstoff an Silicium gebundene Oximgruppen je Molekül aufweisende Siliciumverbindungen solche bevorzugt, die durch Umsetzung eines Gemisches aus Siliciumtetrachlorid und Methyltrichlorsilan, indem 3 bis 25 Mol Methyltrichlorsilan je Mol Siliciumtetrachlorid vorliegen, mit Oxim der Formel HON=X, wobei X die oben dafür angegebene Bedeutung hat, im Verhältnis von ein Mol HON=X je Grammatom Si-gebundenen Chlors in Gegenwart eines Chlorwasserstoff bindenden Mittels

und gegebenenfalls Vermischen des so erhaltenen Silangemisches mit Silan der Formel $CH_3Si(ON{=}X)_3$, um den gewünschten Anteil von Siliciumatomen mit der Gruppierung $Si(-O-)_4$ in dem Silangemisch zu erzielen, hergestellt worden sind.

Ebenso kann beispielsweise ein Gemisch aus 1 Mol $Si(NH\ sec.-C_4H_9)_4$ und 3 bis 25 Mol $CH_3Si(NH\ sec.-C_4H_9)_3$ mit Methylethylketoxim in in Mengen von 1 Mol dieses Oxims je Grammäquivalent Aminogruppe umgesetzt und das so erhaltene Silangemisch gegebenenfalls mit Silan der Formel $CH_3Si(ON{=}X)_3$ vermischt werden, um den gewünschten Anteil von Siliciumatomen mit der Gruppierung $Si(-O-)_4$ in dem Silangemisch zu erzielen.

Ebenfalls weil sie bei Raumtemperatur flüssig sind, sind bei der Bereitung der erfindungsgemässen Massen als mindestens drei über Sauerstoff an Silicium gebundene Oximgruppen je Molekül aufweisende Siliciumverbindungen weiterhin solche bevorzugt, die durch Umsetzung eines Gemisches aus Siliciumtetrachlorid und Methyltrichlorsilan, indem 0,25 bis 25 Mol Methyltrichlorsilan je Mol Siliciumtetrachlorid vorliegen, mit Oxim der Formel HON=X, wobei X die oben dafür angegebene Bedeutung hat, im Verhältnis von ein Mol HON=X je Grammatom Si-gebundenen Chlors in Gegenwart eines Chlorwasserstoff bindenden Mittels und Umsetzung des so erhaltenen Silangemisches mit 0,2 bis 1,5 Mol Wasser je Mol des ursprünglich eingesetzten Siliciumtetrachlorids hergestellt worden sind.

Ebenfalls weil sie bei Raumtemperatur flüssig sind, sind bei der Bereitung der erfindungsgemässen Massen als mindestens drei über Sauerstoff an Silicium gebundene Oximgruppen je Molekül aufweisende Siliciumverbindungen schliesslich auch solche bevorzugt, die durch Umsetzung eines Gemisches aus Siliciumtetrachlorid und Methyltrichlorsilan, indem 0,25 bis 2,5 Mol Methyltrichlorsilan je Mol Siliciumtetrachlorid vorliegen, mit Oxim der Formel HON=X, wobei X die oben dafür angegebene Bedeutung hat, im Verhältnis von ein Mol HON=X je Grammatom Si-gebundenen Chlors in Gegenwart eines Chlorwasserstoff bindenden Mittels, Umsetzung des so erhaltenen Silangemisches mit 0,2 bis 1,5 Mol Wasser je Mol ursprünglich eingesetzte Siliciumtetrachlorids und gegebenenfalls Vermischen der so erhaltenen Oligomeren mit Silan der Formel $CH_3Si(ON{=}X)_3$ hergestellt worden sind.

Beispiele für Chlorwasserstoff bindende Mittel sind Ethylendiamin und Triethylamin.

Vorzugsweise werden bei der Bereitung der erfindungsgemässen Massen die über Sauerstoff an Silicium gebundene Oximgruppen enthaltenden Siliciumverbindungen in Mengen von insgesamt 1 bis 5 Oximgruppen in diese Siliciumverbindungen je kondensationsfähiger Endgruppe im kondensationsfähige Endgruppen aufweisenden Diorganopolysiloxan eingesetzt.

Beispiele für weitere Stoffe, die bei der Bereitung der erfindungsgemässen Massen eingesetzt werden können, sind verstärkende anorganische Füllstoffe, nicht-verstärkende anorganische Füllstoffe, Pigmente, lösliche Farbstoffe, Riechstoffe, Weichmacher, wie bei Raumtemperatur flüssige, durch Trimethylsiloxygruppen endblockierte Dimethylpolysiloxan oder Phosphorsäureester, Fungicide, harzartige Organopolysiloxane, einschliesslich solcher aus $(CH_3)_3SiO_{3/2}$- und $SiO_{4/2}$-Einheiten, rein-organische Harze, wie Homo- oder Mischpolymerisate des Acrylnitrils, Polystyrol, Polyvinylchlorid oder Polypropylen, wobei solche rein-organischen Harze, insbesondere Mischpolymerisate aus Styrol und n-Butylacrylat, bereits in Gegenwart vom kondensationsfähige Endgruppen aufweisenden Diorganopolysiloxan durch Polymerisation der genannten Monomeren mittels freier Radikale erzeugt worden sein können, Korrosionsinhibitoren, Polyglykole, die verestert oder verethert sein können, Oxydationsinhibitoren, Hitzestabilisatoren, Lösungsmittel, Mittel zur Beeinflussung der elektrischen Eigenschaften, wie leitfähiger Russ, flammabweisend machende Mittel, Lichtschutzmittel und Mittel zur Verlängerung der Hautbildungszeit, wie Silane mit einem SiC-gebundenen Mercaptoalkylrest sowie zellenerzeugende Mittel, z.B. Azodicarbonamid. Beispiele für verstärkende anorganische Füllstoffe, also für anorganische Füllstoffe mit einer Oberfläche von mindestens 50 $m^2/g$, sind insbesondere pyrogen erzeugte Siliciumdioxyde, unter Erhaltung der Struktur entwässerte Kieselsäurehydrogele und andere Arten von gefälltem Siliciumdioxyd mit einer Oberfläche von mindestens 50 $m^2/g$.

Beispiele für nicht-verstärkende anorganische Füllstoffe, also für anorganische Füllstoffe mit einer Oberfläche von weniger als 50 $m^2/g$, sind bzw. können sein Quarzmehl, Diatomeenerde, Eisenoxyd, Zinkoxyd, Titandioxyd, Calciumcarbonat, Magnesiumcarbonat, Zinkcarbonat, Russ, Glimmer und Neuburger Kreide.

Alle diese verstärkenden und nicht-verstärkenden Füllstoffe können hydrophil oder wie z.B. mit einem hydrophob machenden Mittel behandeltes Calciumcarbonat hydrophob sein.

Organische Zinnverbindungen oder Organozinnverbindungen werden bei der Bereitung der erfindungsgemässen Massen vorzugsweise nicht mitverwendet.

Zur Bereitung der erfindungsgemässen Massen können alle Bestandteile der jeweiligen Masse in beliebiger Reihenfolge miteinander vermischt werden. Dieses Vermischen erfolgt vorzugsweise bei Raumtemperatur und vorzugsweise wird bei diesem Vermischen der Zutritt von Wasser vermieden. Falls erwünscht, kann dieses Vermischen aber auch bei höheren Temperaturen erfolgen, z.B. bei einer Temperatur im Bereich von 35 bis 135°C.

Für die Vernetzung der erfindungsgemässen Massen reicht der übliche Wassergehalt der Luft aus. Die Vernetzung kann, falls erwünscht, auch bei höheren Temperaturen als Raumtemperatur oder bei niedrigen Temperaturen als Raumtemperatur, z.B. bei -5 bis 10°C, durchgeführt werden. Ebenso kann die Vernetzung auch bei Konzentrationen von Wasser durchgeführt werden, die den normalen Wassergehalt der Luft übersteigen.

Die erfindungsgemässen Massen eignen sich ausgezeichnet als Abdichtungsmassen für Fugen, einschliesslich senkrecht verlaufender Fugen und ähnlicher Leerräume mit lichten Weiten von z.B. 10 bis 40 mm, beispielsweise von Gebäuden, Land-, Wasser- und Luftfahrzeugen, oder als Klebstoffe und Verkittungsmassen, z.B. im Fensterbau oder bei der Herstellung von Aquarien oder Vitrinen, sowie z.B. zur Herstellung von Schutzüberzügen, einschliesslich solcher für der ständigen Einwirkung von Süsswasser oder Meerwasser ausgesetzte Oberflächen, oder das Gleiten verhindernden Überzügen oder für andere Anwendungen, bei denen die bisher bekannten, bei Raumtemperatur zu Elastomeren vernetzenden Massen eingesetzt werden konnten, wie die Isolierung von elektrischen oder elektronischen Vorrichtungen oder die Herstellung von gummielastischen Formkörpern.

Korrodierende Enwirkungen auf Kupfer sind bei den erfindungsgemäss hergestellten Massen bzw. den daraus hergestellten Elastomeren nicht zu beobachten.

In den folgenden Beispielen beziehen sich alle Angaben von Teilen auf das Gewicht, soweit nichts anderes angegeben ist.

Beispiel 1

a) Innerhalb von 3 Stunden wird zu einem Gemisch aus 200 g (3,5 Mol) Ethylendiamin, 480 g (5,5 Mol) Methylethylketoxim und 500 ml Toluol, das sich in einem mit Rührer, Rückflusskühler, Thermometer und Tropftrichter versehenen 4-1-Kolben befindet, ein Gemisch aus 170 g Siliciumtetrachlorid (1 Mol) und 75 g (0,5 Mol) Methyltrichlorsilan in 400 ml Toluol unter Rühren tropfenweise gegeben. Dabei wird die Temperatur unterhalb 60°C gehalten. Nach Beendigung der Zugabe des Silangemisches wird noch 2 Stunden weiter gerührt. Dann wird von Amin-Hydrochlorid abfiltriert. Das Filtrat wird in einem Rotationsverdampfer, der mit einem 200ml-Kolben verbunden ist, eingedampft und dabei gleichzeitig bei etwa 16 mbar (abs.) mit 9 ml Wasser und 100 ml Toluol, die in dem 200 ml-Kolben auf 80°C erwärmt werden, in Berührung gebracht. Nachdem Toluol und andere flüchtige Stoffe bei etwa 16 mbar (abs.) abdestilliert wurden, werden 452 g eines bei Raumtemperatur flüssigen, klaren Oligomeren von Methyltris-(methylethylketoxim)-silan und Tetra-(methylethylketoxim)-silan erhalten, indem 0,5 Siliciumatome mit SiC-gebundener Methylgruppe je Siliciumatom mit der Gruppierung $Si(-O-)_4$ vorliegen.

b) 40 Teile eines in den endständigen Einheiten je eine Si-gebundene Hydroxylgruppe aufweisenden Dimethylpolysiloxans mit einer Viskosität von 20 000 mPa·s bei 25°C werden in der angegebenen Reihenfolge mit 30 Teilen eines duch Trimethylsiloxygruppen endblockierten Dimethylpolysiloxans mit einer Viskosität von 100 mPa·s bei 25°C, 1,5 Teilen Tri-n-Butylphenolpolyethylenglykolether mit 13 Ethylenoxydeinheiten, 7 Teilen des Oligomeren, dessen Herstellung oben unter a) beschrieben wurde, 67 Teilen Calciumcarbonat und 8 Teilen Pyrogen in der Gasphase erzeugtem Siliciumdioxyd mit eine Oberfläche von 150 $m^2/g$ vermischt.

Die so erhaltene, durch Evakuieren von Lufteinschlüssen befreite, unter Ausschluss von Wasser lagerfähige, bei Zutritt von Wasser bei Raumtemperatur zu einem Elastomeren vernetzbare Masse ist homogen, geschmeidig weich und standfest sowohl bei 5°C als auch bei 70°C, d.h. sie läuft bei diesen Temperaturen aus einer senkrechten Fuge nicht aus.

Beispiel 2

Die in Beispiel 1 unter b) beschriebene Arbeitsweise wird wiederholt mit der Abänderung, dass anstelle der 7 Teile des Oligomeren, dessen Herstellung in Beispiel 1 unter a) beschrieben wurde, 7 Teile eines bei Raumtemperatur flüssigen Gemisches aus gleichen Teilen dieses Oligomeren und Methyltris-(methylethylketoxim)-silan, in dem also 2,25 Siliciumatome mit SiC-gebundener Methylgruppe je Siliciumatom mit der Gruppierung $Si(-O-)_4$ vorliegen, verwendet werden.

Auch die so erhaltene, durch Evakuieren von Lufteinschlüssen befreite, unter Ausschluss von Wasser lagerfähige, bei Zutritt von Wasser bei Raumtemperatur zu einem Elastomeren vernetzende Masse ist homogen, geschmeidig weich und standfest sowohl bei 5°C als auch bei 70°C.

Beispiel 3

a) Innerhalb von 2,5 Stunden wird zu einem Gemisch aus 380 g (4,36 Mol) Methylethylketoxim, 140 g (2,33 Mol) Ethylendiamin und 1,5 l Toluol in dem mit Rührer, Rückflusskühler, Thermometer und Tropftrichter ausgestalteten 4-l-Kolben ein Gemisch aus 56,7 g (0,33 Mol) Siliciumtetrachlorid und 150 g (1 Mol) Methyltrichlorsilan in 375 g Toluol gegeben. Dabei erwärmt sich der Kolbeninhalt auf 60°C. Nach Beendigung der Zugabe des Silangemisches wird noch 2 Stunden gerührt. Dann wird vom Amin-Hydrochlorid abfiltriert. Das Filtrat wird im Rotationsverdampfer vom Toluol und anderen flüchtigen Stoffen bei etwa 16 mbar befreit. Es werden 385 g eines bei Raumtemperatur flüssigen, klaren Gemisches aus Methyltris-(methylethylketoxim)-silan und Tetra-(methylethylketoxim)-silan erhalten, indem 3 Siliciumatome mit SiC-gebundener Methylgruppe je Siliciumatom mit der Gruppierung $Si(-O-)_4$ vorliegen.

b) Die in Beispiel 1 unter b) beschriebene Arbeitsweise wird wiederholt mit der Abänderung, dass anstelle der 7 Teile des Oligomeren, dessen Herstellung in Beispiel 1 unter a) beschrieben wurde, 7 Teile eines bei Raumtemperatur flüssigen Gemisches aus gleichen Teilen des Silangemisches, dessen Herstellung vorstehend unter a) beschrieben wurde, und Methyltris-(methylethylketoxim)-silan, indem also 7,2 Siliciumatome mit

SiC-gebundener Methylgruppe je Siliciumatom mit der Gruppierung $Si(-O-)_4$ vorliegen, verwendet werden.

Auch die so erhaltene, durch Evakuierung von Lufteinschlüssen befreite, unter Ausschluss von Wasser lagerfähige, bei Zutritt von Wasser bei Raumtemperatur zu einem Elastomeren vernetzende Masse ist homogen, geschmeidig weich und standfest sowohl bei 5°C als auch bei 70°C.

Vergleichsversuch $V_1$

Die in Beispiel 1 unter b) beschriebene Arbeitsweise wird wiederholt mit der Abänderung, dass anstelle der 7 Teile des Oligomeren, dessen Herstellung in Beispiel 1 unter a) beschrieben wurde, 7 Teile Methyltris-(methylethylketoxim)-silan verwendet und als letzter Bestandteil zusätzlich 0,3 Teile Di-2-Butylzinndilaurat in die Masse eingemischt werden.

Die gemäss Beispiel 1 bis 3 und Vergleichsversuch $V_1$ hergestellten Massen werden in Tuben abgefüllt. Nach einigen Tagen werden Proben aus den Tuben in 2 mm dicken Schichten auf einer glatten Unterlage bei 23°C und 50%iger relativer Luftfeuchtigkeit insgesamt 4 Wochen vernetzen und lagern gelassen. Dann werden bei diesen Elastomeren Zugfestigkeit, Reissdehnung und Spannungswert bei 100% Dehnung nach DIN (Deutsche Industrie Norm) 53504 mit Normstab S3 A, Weiterreissfestigkeit nach ASTM 624 mit Form B und Shore-Ad-Härte nach DIN 53505 bestimmt.

Es werden folgende Ergebnisse erhalten:

Tabelle 1

| | Beispiel 1 | Beispiel 2 | Beispiel 3 | Vergleichsversuch $V_1$ |
|---|---|---|---|---|
| Shore-A-Härte | 34 | 34 | 33 | 36 |
| Zugfestigkeit ($N/mm^2$) | 1,5 | 1,5 | 1,5 | 1,5 |
| Reissdehnung (%) | 320 | 400 | 410 | 250 |
| Spannungswert bei 100% Dehnung ($N/mm^2$) | 0,9 | 0,85 | 0,85 | 1,0 |
| Weiterreiss-festigkeit ($N/mm^2$) | 5,9 | 5,9 | 5,9 | 5,3 |

Zur Bestimmung der Vernetzungsgeschwindigkeit werden dünnwandige Aluminiumbecher mit einem Durchmesser von 25 mm und einer Höhe von 17 mm bis zum oberen Rand mit Proben aus den Tuben gefüllt und bei jedem Becher wird die der Luft ausgesetzte Fläche glattgestrichen. Die gefüllten Becher werden bei +5°C und 60% relativer Luftfeuchtigkeit aufbewahrt. Nach 24 Stunden bzw. nach 4 Tagen bzw. nach 10 Tagen wird jeweils ein Becher parallel der senkrechten Wand und in der Mitte durchgeschnitten. Der nicht-vernetzte Teil des Becherinhalts wird mittels eines Spachtels entfernt und die Höhe des vernetzten Teils des Becherinhalts mittels einer Mikrometerschraube bestimmt. Ebenso wird die Zeit bestimmt, die verstreicht, bis sich bei 23°C und 50% relativer Luftfeuchtigkeit bei aus den Tuben entnommenen Proben eine Haut gebildet hat. Weiterhin wird die Zeit bestimmt, die verstreicht, bis sich bei 5°C bzw. 15°C und 30°C bei jeweils 50% relativer Luftfeuchtigkeit bei aus den Tuben entnommenen Proben von Massen gemäss Beispiel 1 und Massen gemäss Vergleichsversuch $V_1$ eine Haut gebildet hat. Die Ergebnisse sind in Tabelle 2 angegeben.

Tabelle 2

| | Höhe des vernetzten Teils bei Beispiel 1 (mm) | Beispiel 2 | Beispiel 3 | Vergleichsversuch $V_1$ (mm) |
|---|---|---|---|---|
| nach 24 Stunden | 2,4 | 2,4 | 2,1 | 1,9 |
| nach 4 Tagen | 4,1 | 4,0 | 3,9 | 3,6 |
| nach 10 Tagen | 6,3 | 6,3 | 5,9 | 5,2 |

| | Beispiel 1 | Beispiel 2 | Beispiel 3 | Vergleichsversuch $V_1$ |
|---|---|---|---|---|
| Hautbildungszeit bei 23°C in Minuten | 12 | 14 | 20 | 20 |

| | Beispiel 1 | Vergleichsversuch $V_1$ |
|---|---|---|
| Hautbildungszeit in Minuten bei 5°C | 25 | 130 |
| 15°C | 17 | 45 |
| 30°C | 15 | 22 |

Beispiel 4

a) Innerhalb von 1,5 Stunden wird zu einem Gemisch aus 220 g (2,5 Mol) Methylethylketoxim, 255 g (2,5 Mol) Triethylamin und 500 ml Toluol in dem mit Rührer, Rückflusskühler, Thermometer und Tropftrichter ausgestatteten 4-1-Kolben ein Gemisch aus 42,5 g (0,25 Mol) Siliciumtetrachlorid und 75 g (0,5 Mol) Methyltrichlorsilan in 250 ml Toluol unter Rühren tropfenweise gegeben, dabei wird die Temperatur unter 80°C gehalten. Nach Beendigung der Zugabe des Silangemisches wird noch 2 Stunden weiter gerüht. Dann wird vom ausgefallenen Aminhydrochlorid abfiltriert. Das Filtrat wird in dem Rotationsverdampfer, der mit einem 200-ml-Kolben verbunden ist, eingedampft und dabei gleichzeitig bei etwa 16 mbar (abs.) mit 4,5 ml Wasser und 100 ml Toluol, die in dem 200-ml-Kolben auf 80°C erwärmt werden, in Berührung gebracht. Nachdem Toluol

und andere flüchtige Stoffe bei etwa 16 mbar (abs.) abdestilliert wurden, werden 218 g eines bei Raumtemperatur flüssigen, klaren Oligomeren von Methyltris-(methylethylketoxim)-silan und Tetra-(methylketoxim)-silan, indem 2 Siliciumatome mit SiC-gebundene Methylgruppe je Siliciumatom mit der Gruppierung $Si(-O-)_4$ vorliegen, erhalten.

b) 76 Teile eines in den endständigen Einheiten je eine Si-gebundene Hydroxylgruppe aufweisenden Dimethylpolysiloxans mit einer Viskosität von 80 000 mPa·s bei 25°C werden in der angegebenen Reihenfolge mit 26 Teilen des durch Trimethylsiloxygruppen enblockierten Dimethylpolysiloxans mit einer Viskosität von 100 mPa·s bei 25°C 6 Teilen des Oligomeren, dessen Herstellung vorstehend unter a) beschrieben wurde, und 10 Teilen Pyrogen in der Gasphase erzeugtem Siliciumdioxyd mit einer Oberfläche von 150 $m^2/g$ vermischt.

Die so erhaltene, durch Evakuieren von Lufteinschlüssen befreite, unter Ausschluss von Wasser lagerfähige, bei Zutritt von Wasser bei Raumtemperatur zu einem Elastomeren vernetzende Masse ist homogen, geschmeidig weich und standfest.

Beispiel 5

Die in Beispiel 4 unter b) beschriebene Arbeitsweise wird wiederholt mit der Abänderung, das anstelle der 6 Teile des Oligomeren, dessen Herstellung in Beispiel 4 unter a) beschrieben wurde, 6 Teile des Oligomeren, dessen Herstellung in Beispiel 3 unter a) beschrieben wurde, verwendet werden.

Auch die so erhaltene, durch Evakuieren von Lufteinschlüssen befreite, unter Ausschluss von Wasser lagerfähige, bei Zutritt von Wasser bei Raumtemperatur zu einem Elastomeren vernetzende Masse ist homogen, geschmeidig weich und standfest.

Vergleichsversuch $V_2$

Die in Beispiel 4 unter b) beschriebene Arbeitsweise wird wiederholt mit der Abänderung, dass anstelle der 6 Teile des Oligomeren, dessen Herstellung in Beispiel 4 unter a) beschrieben wurde, 6 Teile Methyltris-(methylethylketoxim)-silan verwendet und als letzter Bestandteil 0,12 Teile Di-n-butylzinnlaurat in die Masse eingemischt werden.

Vergleichsversuch $V_3$

Die in Beispiel 4 unter b) beschriebene Arbeitsweise wird wiederholt mit der Abänderung, dass anstelle der 6 Teile des Oligomeren, dessen Herstellung in Beispiel 4 unter a) beschrieben wurde, 6 Teile von zur Verflüssigung auf 70°C erwärmtem Tetra-(methylethylketoxim)-silan verwendet werden. Die so erhaltene Masse ist nicht homogen, sondern enthält kleine Bereiche, die härter sind, als die sie umgebende Masse. Diese härteren Bereiche sind durch die hohe Vernetzungswirksamkeit von Tetra-(methylethylketoxim)-silan entstanden.

Die gemäss den Beispielen 4 und 5 und den Vergleichsversuchen $V_2$ und $V_3$ hergestellten Massen werden in Tuben abgefüllt. Nach Lagerung von einem Tag sowie nach Lagerung von einem halben Jahr werden den Tuben Proben entnommen und es wird die Zeit in Minuten bestimmt, die verstreicht, bis sich bei 23°C und 50% relativer Luftfeuchtigkeit eine Haut auf den Proben gebildet hat. Es wurden folgende Ergebnisse erhalten:

Tabelle 3

| Beispiel | Hautbildungszeit nach Lagerung von 1 Tag | 0,5 Jahren |
|---|---|---|
| 4 | 16 | 12 |
| 5 | 25 | 19 |
| Vergleichsversuch | | |
| $V_2$ | 75 | 15 |
| $V_3$ | 4 | 2,5 |

Beispiel 6

55 Teile des in den endständigen Einheiten je eine Si-gebundene Hydroxylgruppe aufweisenden Dimethylpolysiloxans mit einer Viskosität von 80 000 mPa·s bei 25°C werden in der angegebenen Reihenfolge mit 35 Teilen des durch Trimethylsiloxygruppen endblockierten Dimethylpolysiloxans mit einer Viskosität von 100 mPa·s bei 25°C, 6 Teilen der in der folgenden Tabelle 4 angegebenen Siliciumverbindungen mit Oximgruppen und 11 Teilen Pyrogen in der Gasphase erzeugtem Siliciumdioxyd mit einer Oberfläche von 150 $m^2/g$ vermischt.

Bei der Bestimmung der Hautbildungszeiten bei 23°C und 50% relativer Luftfeuchtigkeit werden folgende Ergebnisse erhalten:

Tabelle 4

| Ansatz | Anzahl der Si-Atome mit SiC-gebundener Methylgruppe je Si-Atom mit Gruppierung $Si(-O-)_4$ | Hautbildungszeit in Minuten |
|---|---|---|
| a) Gemisch aus gleichen Teilen Oligomer, dessen Herstellung in Beispiel 1 unter a) beschrieben wurde, und Methyltris-(methylethylketoxim)-silan | 2,25 | 3 |

Tabelle 4 (Fortsetzung)

| Ansatz | Anzahl der Si-Atome mit SiC-gebundener Methylgruppe je Si-Atom mit Gruppierung $Si(-O-)_4$ | Hautbildungszeit in Minuten |
|---|---|---|
| b) Gemisch aus 1 Teil Oligomer, dessen Herstellung in Beispiel 1 unter a) beschrieben wurde, und 2 Teilen Methyltris-(methylethylketoxim)-silan | 4 | 4 |
| c) Gemisch aus 1 Teil Oligomer, dessen Herstellung in Beispiel 1 unter a) beschrieben wurde, und 4 Teilen Methyltris-(methylethylketoxim)-silan | 7,5 | 6 |
| d) Gemisch aus 1 Teil Oligomer, dessen Herstellung in Beispiel 1 unter a) beschrieben wurde, und 6 Teilen Methyltris-(methylethylketoxim)-silan | 11 | 8 |
| e) Gemisch aus 1 Teil Oligomer, dessen Herstellung in Beispiel 1 unter a) beschrieben wurde, und 10 Teilen Methyltris-(methylethylketoxim)-silan | 18 | 16 |
| f) Gemisch aus 1 Teil Silangemisch, dessen Herstellung in Beispiel 3 unter a) beschrieben wurde, und 1 Teil Methyltris-(methylethylketoxim)-silan | 7,2 | 7 |
| g) Gemisch aus 1 Teil Silangemisch, dessen Herstellung in Beispiel 3 unter a) beschrieben wurde, und 2 Teilen Methyltris-(methylethylketoxim)-silan | 11,5 | 9 |
| h) Gemisch aus 1 Teil Silangemisch, dessen Herstellung in Beispiel 3 unter a) beschrieben wurde, und 4 Teilen Methyltris-(methylethylketoxim)-silan | 20 | 19 |

Beispiel 7

a) In einem Polymerisationsgefäss mit einem Innendurchmesser von 312 mm, das mit einem mit 50 Umdrehungen je Minute betriebenen Ankerrührer mit einer Längsausdehnung von 295 mm an der breitesten Stelle, Gaseinleitungsrohr, Rückflusskühler und Temperaturaufzeichnungsvorrichtung ausgestattet ist, wird unter Stickstoff ein Gemisch aus 5,2 kg (50 Mol) Styrol, 4,2 kg (33 Mol) n-Butylacrylat, 4,04 kg in den endständigen Einheiten je eine Si-gebundene Hydroxylgruppe aufweisendes Dimethylpolysiloxan mit einer Viskosität von 430 mPa·s bei 25°C, 0,8 kg Wasser und 0,141 kg 1,1-Di-tert.-butylperoxy-3,3,5-trimethylcyclohexan mittels eines bei 100°C gehaltenen Wasserdampf-Mantels 7 Stunden erwärmt. Die Temperatur des Polymerisationsgefäss-Inhalts steigt nicht über 97°C.

Zur Entfernung von nicht-umgesetzten Monomeren und von Wasser wird zunächst bei 100° bis 130°C Stickstoff durch das Reaktionsgemisch geblasen und dann das Reaktionsgemisch 3 Stunden bei 16 mbar (abs.) auf 130°C erwärmt. Die Viskosität des so erhaltenen Gemisches beträgt 22 000 mPa·s bei 25°C.

b) 125 Teile des Gemisches, dessen Herstellung vorstehend unter a) beschrieben wurde, werden in der angegebenen Reihenfolge mit 11 Teilen eines in den endständigen Einheiten je eine Si-gebundene Hydroxylgruppe aufweisenden Dimethylpolysiloxans mit einer Viskosität von 500 mPa·s bei 25°C, 4 Teilen eines in den endständigen Einheiten je eine Si-gebundene Hydroxylgruppe aufweisenden Dimethylpolysiloxans mit einer Viskosität von 20 000 mPa·s bei 25°C, 13 Teilen Gemisch aus 1 Teil Silangemisch, dessen Herstellung in Beispiel 3 unter a) beschrieben wurde, 1 Teil Methyltris-(methylethylketoxim)-silan und 4 Teilen Pyrogen in der Gasphase erzeugtem Siliciumdioxyd mit einer Oberfläche von 200 $m^2/g$ vermischt. In die so erhaltene durch Evakuieren von Lufteinschlüssen befreite Masse werden 41 Teile Alkangemisch mit einem Siedebereich von 100 bis 140°C bei 1020 mbar (abs.) eingemischt. Die so erhaltene Dispersion hat eine Viskosität von 20 000 bis 30 000 mPa·s bei 25°C.

Vergleichsvesuch $V_4$

Die in Beispiel 7 unter b) beschriebene Arbeitsweise wird wiederholt mit der Abänderung, dass anstelle der 13 Teile des dort verwendeten Silangemisches 13 Teile Methyltris-(methylethylketoxim)-silan und gleichzeitig mit dem Einmischen

des Alkangemisches 0,4 Teile Di-n-butylzinndilaurat in die Masse eingemischt werden.

In die gemäss Beispiel 7 b) und Vergleichsversuch $V_4$ hergestellten Dispersionen werden Kupfer- und Eisenbleche, die jeweils eine Dicke von 2 mm aufweisen und vorher durch Behandlung mit Lösungsmittel von Schmutz, einschliesslich Fett, befreit wurden, jeweils einmal getaucht und dann 7 Tage an der Luft aufbewahrt. Die Bleche weisen dann einen elastomeren Überzug mit einer Dicke von etwa 0,4 mm auf. Der Überzug, der aus der Dispersion gemäss Beispiel 7 b) hergestellt wurde, haftet so fest auf den Metalloberflächen, dass er nicht ohne Zerstörung dieses Überzugs entfernt werden kann. Der Überzug, der aus der Dispersion gemäss Vergleichsversuchs $V_4$ hergestellt wurde, lässt sich in zusammenhängenden Flächen von den Blechen abziehen. Die Farbe der mit dem Überzug aus der Dispersion gemäss Beispiel 7 b) versehenen Kupferbleche ist nicht verändert. Die mit dem Überzug aus der Dispersion gemäss Vergleichsversuch $V_4$ versehenen Kupferbleche haben sich dagegen dunkel verfärbt.

**Patentansprüche**

1. Unter Ausschluss von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit mindestens drei über Sauerstoff an Silicium gebundene Oximgruppen je Molekül aufweisender Siliciumverbindung sowie gegebenenfalls mindestens einem weiteren Stoff hergestellt worden sind, dadurch gekennzeichnet, dass als mindestens ein Teil von mindestens drei über Sauerstoff an Silicium gebundene Oximgruppen je Molekül aufweisenden Siliciumverbindungen ein Gemisch aus Silan, an dessen Siliciumatom vier Oximgruppen über Sauerstoff gebunden sind, und Silan, an dessen Siliciumatom ein Kohlenwasserstoffrest SiC-gebunden ist und drei Oximgruppen über Sauerstoff gebunden sind, oder Oligomer aus derartigem Silangemisch verwendet worden ist.

2. Massen nach Anspruch 1, dadurch gekennzeichnet, dass bei den Siliciumatomen mit Oximgruppen insgesamt 0,25 bis 25 Siliciumatome mit SiC-gebundenem Kohlenwasserstoffrest je Siliciumatom mit der Gruppierung $Si(-O-)_4$ vorliegen.

3. Massen nach Anspruch 1 oder 2, dadurch gekennzeichnet, dass als Silan, an dessen Siliciumatom vier Oximgruppen über Sauerstoff gebunden sind, bzw. als Ausgangsprodukt für entsprechendes Oligomer solches der Formel

$$Si(ON=X)_4$$

verwendet worden ist, wobei X gleich oder verschiedene Reste der Formel $R^1_2C=$ oder $R^2C=$ bedeutet, worin $R^1$ gleiche oder verschiedene, einwertige Kohlenwasserstoffreste mit 1 bis 5 Kohlenstoffatomen je Rest und $R^2$ einen zweiwertigen Kohlenwasserstoffrest mit 5 oder 6 Kohlenstoffatomen bedeutet.

4. Massen nach mindestens einem der Ansprüche 1 bis 3, dadurch gekennzeichnet, dass als Silan, an dessen Siliciumatom ein Kohlenwasserstoffrest SiC-gebunden ist und drei Oximgruppen über Sauerstoff gebunden sind, bzw. als Ausgangsprodukt für entsprechendes Oligomer solches der Formel

$$CH_3\ Si(ON=X)_3,$$

wobei X die in Anspruch 3 dafür angegebene Bedeutung hat, verwendet worden ist.

5. Massen nach mindestens einem der Ansprüche 1 bis 4, dadurch gekennzeichnet, dass als mindestens drei über Sauerstoff an Silicium gebundene Oximgruppen je Molekül aufweisende Siliciumverbindungen solche verwendet worden sind, die durch Umsetzung eines Gemisches aus Siliciumtetrachlorid und Methyltrichlorsilan, in dem 3 bis 25 Mol Methyltrichlorsilan je Mol Siliciumtetrachlorid vorliegen, mit Oxim der Formel HON=X, wobei X die oben dafür angegebene Bedeutung hat, im Verhältnis von ein Mol HON=X je Grammatom Si-gebundenen Chlors in Gegenwart eines Chlorwasserstoff bindenden Mittels und gegebenenfalls Vermischen des so erhaltenen Silangemisches mit Silan der Formel $CH_3Si(ON=X)_3$ hergestellt worden sind.

6. Massen nach mindestens einem der Ansprüche 1 bis 4, dadurch gekennzeichnet, dass als mindestens drei über Sauerstoff an Silicium gebundene Oximgruppen je Molekül aufweisende Siliciumverbindungen solche verwendet worden sind, die durch Umsetzung eines Gemisches aus Siliciumtetrachlorid und Methyltrichlorsilan, in dem 0,25 bis 25 Mol Methyltrichlorsilan je Mol Siliciumtetrachlorid vorliegen, mit Oxim der Formel HON=X, wobei X die oben dafür angegebene Bedeutung hat, im Verhältnis von ein Mol HON=X je Grammatom Si-gebundenen Chlors in Gegenwart eines Chlorwasserstoff bindenden Mittels und Umsetzung des so erhaltenen Silangemisches mit 0,2 bis 1,5 Mol Wasser je Mol ursprünglich eingesetzten Siliciumtetrachlorids hergestellt worden sind.

7. Massen nach mindestens einem der Ansprüche 1 bis 4, dadurch gekennzeichnet, dass als mindestens drei über Sauerstoff an Silicium gebundene Oximgruppen je Molekül aufweisende Siliciumverbindungen solche verwendet worden sind, die durch Umsetzung eines Gemisches aus Siliciumtetrachlorid und Methyltrichlorsilan, in dem 0,25 Mol bis 2,5 Mol Methyltrichlorsilan je Mol Siliciumtetrachlorid vorliegen, mit Oxim der Formel HON=X, wobei X die oben dafür angegebene Bedeutung hat, im Verhältnis von ein Mol HON=X je Gramatom Si-gebundenen Chlors in Gegenwart eine Chlorwasserstoff bindenden Mittels, Umsetzung des so erhaltenen Silangemisches mit 0,2 bis 1,5 Mol Wasser je Mol urprünglich eingesetzten Siliciumtetrachlorids und gegebenenfalls Vermischen des so erhaltenen Oligomeren mit Silan der Formel $CH_3Si(ON{=}X)_3$ hergestellt worden sind.

**Claims**

1. Compositions that are storable in the absence of water and that crosslink to form elastomers in the presence of water at room temperature and that have been manufactured by mixing a diorganopolysiloxane having condensable terminal groups with a silicon composition having at least three oxime groups per molecule bonded to silicon via oxygen, and optionally at least one further substance, characterised in that the silicon composition having at least three oxime groups per molecule bonded to silicon via oxygen comprises a mixture comprising a silane the silicon atom of which has four oxime groups bonded to it via oxygen, and a silane the silicon atom of which has a hydrocarbon radical bonded to it via a SiC-bonding and has three oxime groups bonded to it via oxygen, or an oligomer from such a silane mixture.

2. Compositions according to claim 1, characterised in that in the case of the silicon atoms with oxime groups there is a total of from 0.25 to 25 solicon atoms with a SiC-bonded hydrocarbon radical per silicon atom with the grouping $Si(-O-)_4$

3. Compositions according to claim 1 or 2, characterised in that there has been used, as the silane the silicon atom of which has four oxime groups bonded to it via oxygen, and/or as the starting product for the corresponding oligomer a silan of the formula

$$Si(ON{=}X)_4$$

in which X represents the same or different radicals of the formula $R^1{}_2C{=}$ or $R^2C{=}$, in which $R^1$ represents the same or different monovalent hydrocarbon radicals having from 1 to 5 carbon atoms per radical and $R^2$ represents a divalent hydrocarbonradical having 5 or 6 carbon atoms.

4. Compositions according to any one of claims 1 to 3, characterised in that there has been used, as the silane the silicon atom of which has a hydrocarbon radical SiC-bonded to it and has three oxime groups bonded to it via oxygen, and/or as the starting product for the corresponding oligomer, a silane of the formula

$$CH_3\ Si(ON{=}X)_3,$$

in which X has the eaning given in claim 3.

5. Compositions according to any one of claims 1 to 4, characterised in that there has been used, as the silicon composition having at least three oxime groups per molecule bonded to silicon via oxygen, a silicon composition that has been manufactured by reacting a mixture of silicon tetrachlorid and methyltrichlorosilane, with from 3 to 25 moles of methyltrichlorosilane per mole of silicon tetrachloride with an oxime of the formula $HON{=}X$, in which X has the meaning given above, in a ratio of one mole of $HON{=}X$ per gram atom of Si-bonded chlorine, in the presence of a hydrogen chloride binding agent, and optionally mixing the resulting silane mixture with a silane of the formula $CH_3Si(ON{=}X)_3$.

6. Compositions according to any one of claims 1 to 4, characterised in that there has been used, as the silicon composition having at least three oxime groups per molecule bonded to silicon via oxygen, a silicon composition that has been manufactured by reacting a mixture of silicon tetrachloride and methyltrichlorosilane, with from 0.25 to 25 moles of methyltrichlorosilane per mole of silicon tetrachloride with an oxime of the formula $HON{=}X$, in which X has the meaning given above, in a ratio of one mole of $HON{=}X$ per gram atom of Si-bonded chloride, in the presence of a hydrogen chloride binding agent and reacting the resulting silane mixture with from 0.2 to1.5 moles of water per mole of the silicon tetrachloride originally introduced.

7. Compositions according to any one of claims 1 to 4, characterised in that there has been used, as the silicon composition having at least three oxime groups per molecule bonded to silicon via oxygen, a silicon composition that has been manufactured by reacting a mixture of silicon tetrachloride and methyltrichlorosilane with from 0.25 mole to 2.5 moles of methyltrichlorosilane per mole of silicon tetrachloride, with an oxime of the formula $HON{=}X$, in which X has the meaning given above, in a ratio of one mole of $HON{=}X$ pe gram atom of Si-bonded chlorine, in the presence of a hydrogen chloride binding agent, reacting the resulting silane mixture with from 0.2 to 1.5 moles of water per mole of the silicon tetrachloride originally introduced and, optionally, mixing the resulting oligomer with a silane of the formula $CH_3Si(ON{=}X)_3$

**Revendications**

1. Matières qui se conservent bien à l'abri de l'eau et se réticulent en présence d'eau, à la température ambiante, en se transformant en élastomères, et qui ont été préparées par mélangeage d'un poly-diorganosiloxane à radicaux terminaux condensables avec un composé du silicium contenant, par molécule, au moins 3 radicaux d'oximes liés au silicium par l'oxygène et, éventuellement, avec au moins un autre composé, lesdites matières étant caractérisées en ce qu'on a utilisé, en tant qu'au moins une partie des composés du silicium contenant, par molécule, au moins 3 radicaux d'oximes liés au silicium par l'oxygène, un mélange d'un silane dont l'atome de silicium porte 4 radicaux d'oximes qui lui sont unis chacun par leur atome d'oxygène, et d'un silane dont l'atome de silicium porte un radical hydrocarboné qui lui est directement uni (liaison du type SiC) et 3 radicaux d'oximes qui lui sont liés chacun par l'oxygène, ou un oligomère d'un tel mélange de silanes.

2. Matières selon la revendication 1 caractérisées en ce que, parmi les atomes de silicium porteurs de radicaux d'oximes, il y a au total de 0,25 à 25 atomes de silicium porteurs d'un radical hydrocarboné à liaison SiC par atome de silicium appartenant à un groupement $Si(-0-)_4$.

3. Matières selon l'une des revendications 1 et 2, caractérisées en ce qe, comme silane sur l'atome de silicium duquel sont fixés 4 radicaux d'oximes liés par l'oxygène, ou comme corps de départ pour l'oligomère correspondant, on a utilisé un silane répondant à la formule

$$Si(ON=X)_4$$

dans laquelle les X représentent chacun, indépendamment les uns des autres, un radical répondant à la formule $R^1{}_2C=$ ou à la formule $R^2C=$ dans lesquelles les $R^1$ représentent chacun, indépendamment l'un de l'autre, un radical hydrocarboné univalent contenant de 1 à 5 atomes de carbone et $R^2$ représente un radical hydrocarboné bivalent contenant 5 ou 6 atomes de carbone.

4. Matières selon l'une quelconque des revendications 1 à 3, caractérisées en ce que, comme silane dont l'atome de silicium porte un radical hydrocarboné à liaison SiC et 3 radicaux d'oximes liés par l'oxigène, ou comme corps de départ pour l'oligomère correspondant, on a utilisé un silane répondant à la formule

$$CH_3\ Si(ON=X)_3,$$

dans laquelle les X ont les significations données à la revendication 3.

5. Matières selon l'une quelconque des revendications 1 à 4, caractérisées en ce qe, comme composés du silicium contenant, par molécule, au moins 3 radicaux d'oximes liés au silicium par l'oxygène, on a utilisé des composés de ce genre qui ont été préparés par réaction d'un mélange de tétrachlorure de silicium et de méthyl-trichlorosilane renfermant de 3 à 25 mol de méthyl-trichlorosilane par mole de tétrachlorure de silicium, avec une oxime répondant à la formule HON=X dans laquelle X a la signification indiquée ci-dessus, dans un rapport de 1 mol de HON=X par atome/gramme de chlore lié à Si, en présence d'un accepteur de chlorure d'hydrogène, et éventuellement mélangeage du mélange de silanes ainsi obtenu avec un silane de formule $CH_3Si(ON=X)_3$.

6. Matières selon l'une quelconque des revendications 1 à 4, caractérisées en ce que, comme composés du silicium contenant, par molécule, au moins 3 radicaux d'oximes liés au silicium par l'oxygène, on a utilisé des composés de ce genre qui ont été préparés par réaction d'un mélange de tétrachlorure de silicium et de méthyl-trichlorosilane contenant de 0,25 à 25 mol de méthyl-trichlorosilane par mole de tétrachlorure de silicium, avec une oxime répondant à la formule HON=X dans laquelle X a la signification qui lui a été donnée plus haut, dans un rapport de 1 mol de HON=X par atome/gramme de chlore lié à Si, en présence d'un accepteur de chlorure d'hydrogène, réaction du mélange de silanes ainsi obtenu avec de 0,2 à 1,5 mol d'eau par mol du tétrachlorure de silicium mis en jeu au départ.

7. Matières selon l'une quelconque de revendications 1 à 4, caractérisées en ce que, comme composés du silicium contenant, par molécule, au moins 3 radicaux d'oximes liés au silicium par l'oxygène, on a utilisé des composés de ce genre qui ont été préparés par réaction d'un mélange de tétrachlorure de silicium et de méthyl-trichlorosilane contenant de 0,25 à 2,5 mol de méthyltrichlorosilane par mol de tétrachlorure de silicium, avec une oxime répondant à la formule HON=X dans laquelle X a la signification qui lui a été donnée ci-dessus, dans un rapport de 1 mol de HON=X par atome/gramme de chlore lié à Si, en présence d'un accepteur de chlorure d'hydrogène, réaction du mélange de silanes ainsi obtenu avec de 0,2 à 1,5 mol d'eau par mole du tétrachlorure de silicium mis en jeu au départ, et éventuellement mélangeage de l'oligomère ainsi obtenu avec un silane de formule $CH_3Si(ON=X)_3$.